(19) Europäisches Patentamt
European Patent Office
Office européen des brevets

(11) Veröffentlichungsnummer: **0 413 206 A2**

(12) # EUROPÄISCHE PATENTANMELDUNG

(21) Anmeldenummer: **90114810.6**

(22) Anmeldetag: **02.08.90**

(51) Int. Cl.5: **C08L 71/00**, C08L 81/06, C08L 25/00, C08L 51/06

(30) Priorität: **15.08.89 DE 3926851**

(43) Veröffentlichungstag der Anmeldung: **20.02.91 Patentblatt 91/08**

(84) Benannte Vertragsstaaten: **DE FR GB IT**

(71) Anmelder: **BAYER AG**

**D-5090 Leverkusen 1 Bayerwerk(DE)**

(72) Erfinder: **Eckel, Thomas, Dr.**
**Gneisenaustrasse 15a**
**D-4047 Dormagen 1(DE)**
Erfinder: **Jansen, Ulrich, Dr.**
**Stürzelberger Strasse 50**
**D-4047 Dormagen 5(DE)**
Erfinder: **Ott, Karl-Heinz, Dr.**
**Paul-Klee-Strasse 54**
**D-5090 Leverkusen 1(DE)**

(54) **Schlagzähe Polysulfon-ABS-Formmassen.**

(57) Thermoplastische Formmassen enthaltend
A. 5 bis 99 Gew.-Teile aromatisches, hochwärmeformbeständiges Polyethersulfon,
B. 5 bis 95 Gew.-Teile α-Methylstyrol-Polymerisats
und
C. 1 bis 95 Gew.-Teile Pfropfpolymerisat harzbildender Monomerer auf einen Kautschuk, ein Verfahren zu ihrer Herstellung und ihre Verwendung zur Herstellung von Formkörper.

EP 0 413 206 A2

# SCHLAGZÄHE POLYSULFON-ABS-FORMMASSEN

Die Erfindung betrifft thermoplastische Formmassen aus aromatischen Polyethersulfonen, speziellen $\alpha$-Methylstyrol-Polymerisaten und bepfropften, teilchenförmigen Kautschuken, ein Verfahren zu ihrer Herstellung durch Mischen der Komponenten bei erhöhter Temperatur und ihre Verwendung zur Herstellung von Formkörpern vornehmlich durch Spritzguß oder Extrusion.

Wärmeformbeständige ABS-Formmassen, die $\alpha$-Methylstyrol-Polymerisate enthalten, sind bekannt (US-PS 3 111 501).

In EP-A 42 572 wurde vorgeschlagen, den Anteil des $\alpha$-Methylstyrols im Polymerisat so groß wie nur möglich zu machen. Dies führt zwar zu einer Verbesserung der Wärmeformbeständigkeit, jedoch ist die Thermostabilität bei hohen Temperaturen d.h. bei der Verarbeitung reduziert.

Die US-PS 4 659 790 lehrt, daß die Thermostabilität und die Wärmeformbeständigkeit von $\alpha$-Methylstyrol/Acrylnitril-Copolymerisaten besonders günstig sein sollen, wenn die Copolymerisate eine bestimmte $\alpha$-Methylstyrol-Sequenzlängen-Verteilung aufweisen; insbesondere sollen $\alpha$-Methylstyrol-Triaden nicht über 15 Gew.-% des Polymerisats ausmachen.

In der US-PS 3 555 119 und der DE-OS 2 025 467 werden Blends aus aromatischen Polyethersulfonen, $\alpha$-Methylstyrol/Acrylnitril-Copolymerisaten und Acrylnitril/Butadien/Styrol-Copolymerisaten (ABS) beschriebene. Diese Mischungen sollen sich durch günstige Fließeigenschaften und hohe Wärmeformbeständigkeit auszeichnen.

In DE-OS 3 601 420 sind Mischungen aus aromatischen Polyethersulfonen, Styrol/Acrylnitril- oder $\alpha$-Methylstyrol/Acrylnitril-Copolymerisaten sowie speziellen Pfropfpolymerisaten - nämlioh mehrschaligen Pfropfpolymerisaten von MBS-Typ - beschrieben, die sich durch hohe Kerbschlagzähigkeiten auszeichnen.

Mischungen aus Polyethersulfonen und ABS zeichnen sich durch eine ausgewogene Wärmeformbeständigkeit, Kerbschlagzähigkeit (auch bei tieferen Temperaturen) und gute Verarbeitbarkeit (gutes Fließverhalten) aus. Es hat sich jedoch gezeigt, daß die Zähigkeit dieser Mischungen für einige Anwendungen, z.B. zur Herstellung von Kraftfahrzeugteilen (Innen- und Außenbereich), die einer starken Stoß- und Schlagbeanspruchung ausgesetzt sind, nicht ausreicht.

Es wurde gefunden, daß sich die Kerbschlagzähigkeit und die Wärmeformbeständigkeit von Formmassen aus Polyethersulfonen, $\alpha$-Methylstyrol-Polymerisaten und ABS bei günstigen Verarbeitungseigenschaften verbessern läßt, wenn als $\alpha$-Methylstyrol-Polymerisate Terpolymerisate von $\alpha$-Methylstyrol, Acrylnitril und Acrylamid eingesetzt werden.

Gegenstand der Erfindung sind thermoplastische Formmassen enthaltend

A. 5 bis 99, vorzugsweise 20 bis 98, insbesondere 40 bis 97 Gew.-Teile, aromatisches, hochwärmeformbeständiges Polyethersulfon,

B. 5 bis 95, vorzugsweise 10 bis 75, insbesondere 15 bis 55 Gew.-Teile $\alpha$-Methylstyrol-Polymerisat aus

B.1 62-85 Gew.-Teilen, bevorzugt 69-80 Gew.-Teilen, $\alpha$-Methylstyrol,

B.2 10-50 Gew.-Teilen, bevorzugt 14-37 Gew.-Teilen, besonders bevorzugt 14-30 Gew.-Teilen Acrylnitril und/oder Methacrylnitril und

B.3 1-50 Gew.-Teilen, bevorzugt 1-20 Gew.-Teilen, besonders bevorzugt 1-10 Gew.-Teilen, Acrylamid und/oder Methacrylamid und

C. 1 bis 95 Gew.-Teile, vorzugsweise 2 bis 60 Gew.-Teile, insbesondere 3 bis 40 Gew.-Teile eines Pfropfpolymerisats harzbildender Monomerer auf einem Kautschuk.

Aromatische Polyethersulfone A im Sinne der Erfindung sind bevorzugt lineare, thermoplastische Polyarylenpolyethersulfone, in welchen die Aryleneinheiten über Ether- und Sulfongruppen verbunden sind. Man erhält sie durch Umsetzung eines Alkalimetalldoppelsalzes eines zweiwertigen Phenols (Bisphenols) mit einer zwei Halogenatome enthaltenden benzoiden Verbindung, wobei mindestens einer der beiden Reaktanten eine Sulfongruppe ($-SO_2-$) enthalten muß. Polyethersulfone sowie ihre Herstellung sind bekannt (vgl. US-PS 3 264 536, GB-PS 1 264 900, EP-A 0 038 028).

Die erfindungsgemäßen Polyethersulfone A enthalten wiederkehrende Einheiten der Formel (I)

-O-Z-O-W- (I)

worin

Z den Rest eines zweiwertigen Phenols und

W den Rest der benzoiden Verbindung mit einer inerten elektronenanziehenden Gruppe bedeutet und

wobei Z und W durch aromatische Kohlenstoffatome über Valenzbindungen an die Sauerstoffatome gebunden sind und mindestens einer der Reste Z und W eine Sulfongruppe zwischen aromatischen Kohlenstoffatomen besitzt.

Bevorzugte Diphenole für die Herstellung der aromatischen Polyethersulfone A sind Verbindungen der

Formel (II)

HO - Z - OH (II)

worin Z einen zweiwertigen, ein- oder mehrkernigen aromatischen Rest mit 6 - 30 C-Atomen bedeutet, und die beiden OH-Gruppen direkt an C-Atome gebunden sind.

Besonders bevorzugte Diphenole entsprechen der Formel (III)

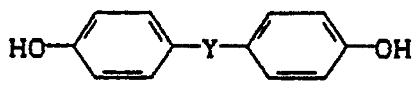

(III)

in der Y eine Einfachbindung, einen Alkylen- oder Alkylidenrest mit 1 - 7 C-Atomen, einen Cycloalkylen- oder Cycloalkylidenrest mit 5 - 12 C-Atomen, -O-, -S-,

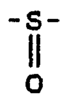 , 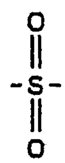 oder 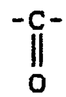

bedeutet,
sowie deren kernalkylierte und kernhalogenierte Derivate.

Beispiele für Diphenole sind:
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole
und entsprechende kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxy-phenyl)-cyclohexan, 4,4'-Dihydroxybiphenyl, 4,4'-Dihydroxydiphenylsulfid, 4,4'-Dihydroxydiphenylsulfon sowie deren di- und tetrahalogenierte und alkylierte Derivate. Besonders bevorzugt ist Bisphenol A. Es können auch beliebige Mischungen der genannten Diphenole verwendet werden.

Bevorzugte aromatische Dihalogenverbindungen sind zweikernige Verbindungen der Formel (IV)

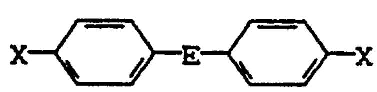

(IV)

Darin bedeuten:
X Halogen (F, Cl, Br, I) und E zweiwertige elektronenanziehende Gruppen, wie Sulfon-, Carbonyl-, Vinyl-, Sulfoxid- oder Azo-Gruppen. Jeder der beiden Benzolringe kann mit einem oder mehreren gesättigten Kohlenwasserstoffresten oder elektronenanziehenden Gruppen substituiert sein.

Bevorzugte aromatische Dihalogenverbindungen der Formel (IV) sind 4,4'-Dichlordiphenylsulfon, 4,4'-Difluordiphenylsulfon, 4,4'-Dichlorbenzophenon und 4,4'-Difluorbenzophenon.

Die aromatischen Polyethersulfone können auch verzweigt sein. Geeignete Verzweigungsmittel sind die für die Herstellung von aromatischen Polyestern (DE-OS 2 940 024) und für die Herstellung von aromatischen Polyestercarbonaten (DE-OS 3 007 934) bekannten.

Als Kettenabbrecher bei der Herstellung der aromatischen Polyethersulfone A werden vorzugsweise

Phenol, Alkylphenole mit $C_1$-$C_{12}$-Alkylgruppen und halogenierte Phenole sowie Bromide und Chloride von $C_1$-$C_{10}$-Alkanen in Mengen von 0,1 bis 10 Mol-% (im Falle von Phenolen bezogen auf Diphenole, im Falle von Chloriden bezogen auf die aromatischen Dihalogen-Verbindungen) verwendet.

Die reduzierten Viskositäten ($\eta_{red}$) der aromatischen Polyethersulfone A sind 0,15 bis 1,5 dl/g vorzugsweise 0,35 bis 0,65 dl/g (gemessen an Lösungen von 20 mg Polyethersulfon A in 10 ml $CHCl_3$ bei 25 °C).

α-Methylstyrol-Polymerisate B sind α-Methylstyrol-Terpolymerisate, die durch Polymerisation von

B.1 62-85 Gew.-Teilen, bevorzugt 69-80 Gew.-Teilen, α-Methylstyrol,

B.2 10-50 Gew.-Teilen, bevorzugt 14-37 Gew.-Teilen, besonders bevorzugt 14-30 Gew.-Teilen Acrylnitril und/oder Methacrylnitril und

B.3 1-50 Gew.-Teilen, bevorzugt 1-20 Gew.-Teilen, besonders bevorzugt 1-10 Gew.-Teilen, Acrylamid und/oder Methacrylamid

entstehen.

In der Mischung aus A, B und C sind 5 bis 95, vorzugsweise 10 bis 75, insbesondere 15 bis 55 Gew.-Teile des α-Methylstyrol-Polymerisats B enthalten

Die α-Methylstyrol-Polymerisate B können durch an sich bekannte Emulsionspolymerisation hergestellt werden. Dabei ist Polymerisation mit kontinuierlicher Monomeren zugabe oder inkrementweiser Monomerenzugabe bei Temperaturen von 50-90 °C bevorzugt.

Als Emulgatoren können bekannte, vorzugsweise anionische Tenside eingesetzt werden; z.B. Na- oder K-Salze der disproportionierten Abietinsäure oder höherer Fettsäuren und Alkalisalze von Alkyl-, und Alkylarylsulfonsäuren sowie Alkylarylcarbonsäuren. Auch organische Sulfate sind geeignet. Auch nichtionische Emulgatoren, z.B. Polyethylenoxidalkylether oder Kombinationen mehrerer Emulgatoren können verwendet werden.

Als Initiatoren können wasserlösliche organische Peroxide, Azoverbindungen, Alkalipersulfate und -perphosphate eingesetzt werden; bei Polymerisationstemperaturen unter 60 °C sind Redoxsysteme auf Basis organischer Peroxide und wasserlöslicher Reduktionsmittel besonders geeignet. Beispiele für Initiatoren sind Kalium- und Ammoniumperoxodisulfat und als Redoxsysteme Cumolhydroperoxid/$Fe^{++}$-Formaldehydsulfoxylat (Rongalit); p-Methanhydroperoxid/$Fe^{++}$/Rongalit; Diisopropylbenzolhydroperoxid/$Fe^{++}$/Ascorbinsäure.

Als Regler zur Einstellung der Molekulargewichte der Polymerisate kann man organische Schwefelverbindungen, wie Mercaptane und Disulfide verwenden, wobei langkettige Mercaptane, z.B. n- und tert.-Dodecylmercaptan bevorzugt sind. Die Regler werden zweckmäßig im Monomergemisch gelöst.

Emulgatoren, Initiatoren und Regler können auch während der Polymerisation kontinuierlich oder diskontinuierlich zugegeben werden.

Nach der Polymerisation wird der erhaltene Polymerisatlatex, gegebenenfalls nach Mischen mit weiteren Polymerisat-Latices und/oder nach Zusatz von Zuschlagstoffen auf bekannte Weise koaguliert (z.B. durch Zusatz von Mineralsäure und/oder Salz) und gewaschen. Das Polymerisat kann im Vakuum bei 100-150 °C zum Pulver getrocknet werden oder vorzugsweise durch Entgasung der Polymerschmelze auf einem Extruder getrocknet werden.

Um Formmassen mit sehr guter Wärmeformbeständigkeit zu erhalten, ist es erforderlich, den Anteil an flüchtigen Bestandteilen (Wasser, Restmonomeren) auf weniger als 4000 ppm, vorzugsweise auf weniger als 2000 ppm, zu reduzieren.

Pfropfpolymerisate C sind grundsätzlich Pfropfpolymerisate harzbildender Monomerer auf einem Kautschuk. Sie umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Pfropfpolymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C werden erhalten durch Polymerisation von

C.1 5 bis 90, vorzugsweise 30 bis 80 Gew.-Teilen, einer Mischung aus

C. 1.1 50 bis 95 Gew.-Teilen Styrol, α-Methylstyrol, halogen- oder methylkernsubstituierte Styrole, Methylmethacrylat oder Mischungen dieser Verbindungen und

C.1.2 5 bis 50 Gew.-Teilen Acrylnitril, Methacrylnitril, Methylmethacrylat, Maleinsäureanhydrid, $C_1$-$C_4$-alkyl- bzw. phenyl-N-substituierte Maleinimide oder Mischungen dieser Verbindungen in Gegenwart von

C.2 10 bis 95, vorzugsweise 20 bis 70, Gew.-Teilen Kautschuk mit einer Glasübergangstemperatur unter -10 °C.

Bevorzugte Pfropfpolymerisate C sind mit Styrol und/oder Acrylnitril und/oder (Meth-)Acrylsäurealkylester bepfropfte Polybutadiene, Butadien/Styrol-Copolymerisate und Acrylatkautschuke; d.h. Copolymerisate der in der DE-OS 1 694 173 beschriebenen Art; mit Acryl- oder Methacrylsäurealkylestern, Vinylacetat, Acrylnitril, Styrol und/oder Alkylstyrolen bepfropfte Polybutadiene, Butadien/Styrol- oder Butadien/Acrylnitril-Copolymerisate, Polyisobutene oder Polyisoprene, wie sie z.B. in der DE-OS 2 348 377 beschrieben sind.

Besonders bevorzugte Pfropfpolymerisate C sind ABS-Polymerisate, wie sie z.B. in der DE-OS 2 035 390 und in der DE-OS 2 248 242 beschrieben sind.

Besonders bevorzugte Pfropfpolymerisate C werden erhalten durch Pfropfpolymerisation von

$\alpha$. 10 bis 70, vorzugsweise 15 bis 50, insbesondere 20 bis 40, Gew.-%, bezogen auf Pfropfprodukt C, mindestens eines Acrylsäureesters oder Methacrylsäureesters oder 10 bis 70, vorzugsweise 15 bis 50, insbesondere 20 bis 40 Gew.-% eines Gemisches aus 10 bis 50, vorzugsweise 20 bis 35, Gew.-%, bezogen auf Gemisch, Acrylnitril, Acrylsäureester oder Methacrylsäureester und 50 bis 90, vorzugsweise 65 bis 80 Gew.-%, bezogen auf Gemisch, Styrol, als Pfropfauflage C.1 in Gegenwart von

$\beta$. 30 bis 90, vorzugsweise 50 bis 85, insbesondere 60 bis 80 Gew.-%, bezogen auf Pfropfprodukt C, eines Butadien-Polymerisats enthaltend mindestens 50 Gew.-%, einpolymerisierten Butadien als Pfropfgrundlage C.2 wobei der Gelanteil der Pfropfgrundlage $\beta$ mindestens 70 Gew.-% (in Toluol gemessen), der Pfropfgrad G 0,15 bis 0,55 und der mittlere Teilchendurchmesser $d_{50}$ des Pfropfpolymerisats C 0,05 bis 2 µm, vorzugsweise 0,1 bis 0,6 µm beträgt.

Acrylsäureester und Methacrylsäureester $\alpha$ sind bevorzugt $C_1$-$C_{18}$-Alkylester. Besonders bevorzugt sind Methacrylsäuremethylester, -ethylester, -propylester und -t-butylester, n-Butylacrylat und t-Butylacrylat.

Die Pfropfgrundlage $\beta$ kann neben Butadienresten bis zu 50 Gew.-%, bezogen auf $\beta$, Reste anderer ethylenisch ungesättigter Monomerer, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether einpolymerisiert enthalten. Die bevorzugte Pfropfgrundlage $\beta$ ist reines Polybutadien.

Zur Herstellung der Pfropfpolymerisate C sind die üblichen Verfahren wie Emulsions-, Suspensions- oder Massepolymerisation geeignet.

Bei der Pfropfreaktion werden die Pfropfmonomeren bekanntlich nicht vollständig auf die Pfropfgrundlage pfropfpolymerisiert. Deshalb werden erfindungsgemäß unter Pfropfpolymerisaten C die Produkte verstanden, die durch Polymerisation der Pfropfmonomeren in Gegenwart der Pfropfgrundlage gewonnen werden.

Der Pfropfgrad G bezeichnet das Gewichtsverhältnis von Pfropfmonomeren zur Pfropfgrundlage und ist dimensionslos.

Der mittlere Teilchendurchmesser $d_{50}$ ist der Durchmesser, oberhalb und unterhalb dessen jeweils 50 Gew.-%, der Teilchen liegen. Er kann mit der Ultrazentrifuge (W. Scholtan, H. Lange, Kolloid, Z. und Z. Polymere 250 (1972), 782-796) bestimmt werden.

Besonders bevorzugte Pfropfpolymerisate C sind auch solche aus

$\tau$. 20 bis 90 Gew.-%, bezogen auf C, Acrylatkautschuk mit einer Glasübergangstemperatur unter -20 °C als Pfropfgrundlage C.2 und

$\delta$. 10 bis 80 Gew.-%, bezogen auf C, mindestens eines polymerisierbaren, ethylenisch ungesättigten Monomeren, dessen bzw. deren Homo-bzw. Copolymerisate eine Glasübergangstemperatur über 25 °C hätten, als Pfropfmonomere C.1.

Die Acrylatkautschuke $\tau$ sind vorzugsweise Polymerisate aus Acrylsäurealkylestern, gegebenenfalls mit bis zu 40 Gew.-%, bezogen auf Acrylatkautschuk, andereren polymerisierbaren, ethylenisch ungesättigten Monomeren. Zu den bevorzugten polymerisierbaren Acrylsäureestern gehören $C_1$-$C_8$-Alkylester, beispielsweise Methyl -, Ethyl -, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat, mehrfach ungesättigte heterocyclische Verbindungen, wie z.B. Trivinyl- und Triallylcyanurat; polyfunktionelle Vinylverbindungen, wie Di- und Trivinylbenzole, aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2

Gew.-%, bezogen auf Acrylatkautschuke $\tau$.

Bei cyclischen vernetzenden Monomeren mit mindestens 3 ethylenisch ungesättigten Gruppen ist es vorteilhaft, die Menge unter 1 Gew.-% des Acrylatkautschuks $\tau$ zu beschränken.

Bevorzugte "andere" polymerisierbare, ethylenisch ungesättigte Monomere, die neben den Acrylsäureestern gegebenenfalls zur Herstellung der Acrylatkautschuk-Grundlage $\tau$ dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke $\tau$ sind Emulsionspolymerisate, die einen Gelgehalt von mindestens 60 Gew.-% aufweisen.

Weitere geeignete Pfropfgrundlagen C.2 sind Silikonkautschuke mit pfropfaktiven Stellen, wie sie in den DE-OS 2 704 657, 3 704 655, 3 631 540 und 3 631 539 beschrieben werden.

Der Gelgehalt der Pfropfgrundlage C.2 wird bei 25° C in Dimethylformamid bestimmt (M. Hoffmann, H. Krömer, R. Kuhn, Polymeranalytik I und II, Georg Thieme-Verlag, Stuttgart 1977).

Die erfindungsgemäßen Formmassen können weitere , für aromatische Polyethersulfone, α-Methylstyrol-Polymerisate sowie Pfropfpolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350° C, in üblichen Vorrichtungen, wie Innen knetern, Extrudern oder Doppelwellenschnecken, schmelzcompoundiert oder schmelzextrudiert. Die Bestandteile können nacheinander oder gleichzeitig gemischt werden.

Weiterer Gegenstand der Erfindung ist also ein Verfahren zur Herstellung der erfindungsgemäßen Formmassen durch Mischen ihrer Bestandteile bei erhöhter Temperatur.

Die erfindungsgemäßen Formmassen können zur Herstellung von Formkörpern jeder Art z.B. durch Spritzgießen verwendet werden. Beispiele für Formkörper sind: Gehäuseteile (z.B. für Haushaltsgeräte, wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

Die in den folgenden Beispielen angegebenen Mengen sind Gewichtsteile.

## Aromatische Polyethersulfone A

1141,7 Teile 2,2-Bis-(4-hydroxyphenyl)-propan und 1435,8 Teile Bis-(4-chlor-phenyl)-sulfon werden unter Stickstoff in 4500 Teilen N-Methylpyrrolidon und 970 Teilen Chlorbenzol gelöst und mit 760 Teilen wasserfreiem Kaliumcarbonat versetzt. Das Reaktionsgemisch wird innerhalb von 30 Minuten auf 180° C erhitzt und dort für 5 Stunden gehalten, wobei ein Gemisch aus Wasser und Chlorbenzol abdestilliert. Innerhalb weiterer 4 Stunden wird das Chlorbenzol abdestilliert. Nach einer Reaktionszeit von 6 Stunden wird das Reaktionsgemisch auf 60 - 70° C abgekühlt, das Polymere in Methanol ausgefällt, mit Wasser gewaschen und im Vakuum getrocknet. Das Produkt besitzt eine reduzierte Viskosität von 0,52 dl/g ($CHCl_3$ bei 25° C).

## α-Methylstyrol (AMS)-Polymerisate B

### B1 (Vergleichsbeispiel)

In einem 10-l-Glaskolben wurde eine Emulgatorlösung aus 2,5 Gew.-Teilen Na-Dresinate in 150 Gew.-Teilen entionisiertem Wasser vorgelegt. Es wurde auf 75° C aufgeheizt und 30 Minuten mit Stickstoff gespült. Anschließend wurde eine Lösung von 0,35 Gew.-Teilen Kaliumpersulfat in 20 Gew.-Teilen Wasser zugegeben. Eine Monomermischung aus 69 Gew.-Teilen α-Methylstyrol (AMS) und 31 Gew.-Teilen Acrylnitril (ACN) wurde gleichmäßig während 6 Stunden zudosiert. Nach beendeter Zugabe wurde 3 Stunden nachgerührt, anschließend wurde der Polymerlatex durch Zugabe einer wäßrigen Mineralsäure-Lösung koaguliert und getrocknet. (Umsatz 98 %)

B2 (α-Methylstyrol-Acrylnitril-Acrylamid)-Terpolymer

In einem 10-l-Glaskolben wurde eine Emulgatorlösung aus 2,5 Gew.-Teilen Na-Dresinate in 150 Gew.-Teilen entionisiertem Wasser vorgelegt. Es wurde auf 75°C aufgeheizt und 30 Minuten mit Stickstoff gespült. Eine Monomermischung aus 35 Gew.-Teilen α-Methylstyrol (AMS), 5 Gew.-Teilen Acrylnitril (ACN) und 1 Gew.-Teil Acrylamid (AA) wurde zugegeben und 10 Minuten emulgiert. Anschließend wurde eine Lösung von 0,35 Gew.-Teilen Kaliumpersulfat in 20 Gew.-Teilen Wasser zugegeben und 1 Stunde bei 75°C gerührt. Eine Monomermischung aus 40 Gew.-Teilen AMS, 19 Gew.-Teilen ACN sowie 0,2 Gew.-Teilen tert.-Dodecylmercaptan und eine Lösung von 1 Gew.-Teil Acrylamid in 20 Gew.-Teilen Wasser wurden anschließend über einen Zeitraum von 6 Stunden zudosiert. Nach beendeter Zugabe wurde 2 Stunden nachgerührt, anschließend der Polymerlatex durch Zugabe einer wäßrigen Mineralsäure-Lösung koaguliert und getrocknet. (Umsatz 97 %).

<u>Pfropfpolymerisate C</u>

C1

Pfropfpolymerisat von 50 Gew.-Teilen eines Gemischs aus Styrol und Acrylnitril im Verhältnis 72:28 auf 50 Gew.-Teile teilchenförmigen Polybutadienkautschuk mit einem mittleren Teilchendurchmesser von 0,4 µm ($d_{50}$-Wert), hergestellt durch Emulsionspolymerisation.

C2

Pfropfpolymerisat von 50 Gew.-Teilen eines Styrol-Acrylnitril-Gemisches (Gew.-Verhältnis 72:28) auf 50 Gew.-Teile eines partiell vernetzten Polybutadiens mit einem mittleren Teilchendurchmesser von 0,1 µm ($d_{50}$-Wert), einem Gelgehalt von 89 Gew.-% gemäß DE-OS 3 708 913.

Herstellung:

Eine Mischung aus 200 Gew.-Teilen eines 50 Gew.-%igen Latex des Polybutadiens und 149 Gew.-Teilen Wasser werden in einem Reaktor vorgelegt und auf 60 bis 62°C aufgeheizt. Bei dieser Temperatur werden nacheinander in den Reaktor eingegeben:

1. Mischung (Emulsion) aus
0,0836 Gew.-Teilen Cumolhydroperoxid
6,9600 Gew.-Teilen Wasser
0,0600 Gew.-Teilen Na-Salz von $C_{14}$-$C_{16}$-Alkylsulfonsäuren
2. Mischung (Lösung) aus
0,0557 Gew.-Teilen Ascorbinsäure
6,9600 Gew.-Teilen Wasser

Danach werden die folgenden Mischungen Z1 bis Z3 innerhalb von 4 Stunden bei einer Innentemperatur von 60 bis 62°C kontinuierlich unter Rühren in den Reaktor eingebracht.

Z 1: 39,05 Gew.-Teile Wasser
4,00 Gew.-Teile Na-Salz der disproportionierten Abietinsäure
3,10 Gew.-Teile 1n-Natronlauge
0,62 Gew.-Teile Cumolhydroperoxid
Z 2: 72 Gew.-Teile Styrol
28 Gew.-Teile Acrylnitril
Z 3: 39,8 Gew.-Teile Wasser
0,105 Gew.-Teile Ascorbinsäure

Anschließend wird bei 60 bis 62 °C 6 Stunden auspolymerisiert. Der Monomerumsatz ist größer als 97 Gew.-%.

Nach der Stabilisierung mit 1,2 Gew.-Teilen phenolischem Antioxidanz pro 100 Gew.-Teilen Pfropfpolymerisat wird dieses durch Koagulation mit einer Essigsäure/Magnesiumsulfat-Mischung ausgefällt, gewaschen und zu einem Pulver getrocknet.

Die Pfropfausbeute, d.h. das Gewichtsverhältnis von pfropfpolymerisiertem Styrol und Acrylnitril zum gesamten Styrol und Acrylnitril beträgt 89 Gew.-%.

Die Pfropfausbeute wurde bestimmt durch fraktionierende Entmischung mit den entmischenden Flüssigkeiten Dimethylformamid/Methylcyclohexan in der Ultrazentrifuge und durch Ermittlung der Mengen und der chemischen Zusammensetzung der so erhaltenen Fraktionen (s. R. Kuhn, Makromol. Chemie **177**, 1525 (1976)).

Herstellung und Prüfung der erfindungsgemäßen Formmassen

A, B und C wurden in einem 1,3 l-Innenkneter bei 200 bis 300 °C gemeinsam aufgeschmolzen und homogenisiert.

Aus diesen Formmassen wurden auf einer Spritzgußmaschine Stäbe der Abmessung 80 x 10 x 4 mm (Verarbeitungstemperatur: 260 °C) hergestellt, an denen die Kerbschlagzähigkeit (nach Methode ISO 180) bei Zimmertemperatur, 0 °C, -10 °C, -20 °C, -30 °C, -40 °C gemessen wurde.

Daraus wurde der Zäh-Spröd-Übergang bestimmt, d.h. jener Temperaturbereich, in dem die ersten Sprödbrüche auftreten.

Die Wärmeformbeständigkeit nach Vicat B wurde gemäß DIN 53 460 bestimmt.

Wie die folgende Tabelle zeigt, besitzen die erfindungsgemäßen Formmassen der Beispiele 2 und 3 gegenüber der Formmasse gemäß Vergleichsbeispiel 1, (wo ein handelsübliches α-Methylstyrol/Acrylnitril-Copolymer verwendet wurde) deutlich verbesserte Kerbschlagzähigkeit und Wärmeformbeständigkeit. Auch die Tieftemperaturzähigkeit wird bei Verwendung des erfindungsgemäßen Terpolymerisats günstig beeinflußt.

Tabelle

| Zusammensetzung der Formmassen und ihre Eigenschaften | | | | | | | | |
|---|---|---|---|---|---|---|---|---|
| Beispiel | Bestandteile | | | | | Kerbschlagzähigkeit $a_k$ bei 20 °C [kJ/m²] | Zäh-Spröd-Übergang [°C] | Vicat B 120 [°C] |
| | A | B1 | B2 | C1 | C2 | | | |
| | [Gew.-%] | | | | | | | |
| 1 (Vergl.) | 60 | 20 | - | 20 | - | 38 | 0/-10 | 137 |
| 2 | 60 | - | 20 | 20 | - | 57 | -10/-20 | 143 |
| 3 | 60 | - | 20 | - | 20 | 68 | -20/-30 | 149 |

**Ansprüche**

1. Thermoplastische Formmassen enthaltend
A. 5 bis 99 Gew.-Teile aromatisches, hochwärmeformbeständiges Polyethersulfon,
B. 5 bis 95 Gew.-Teile α-Methylstyrol-Polymerisats
und
C. 1 bis 95 Gew.-Teile Pfropfpolymerisat harzbildender Monomerer auf einen Kautschuk.

2. Formmassen gemäß Anspruch 1, enthaltend 20 bis 98 Gew.-Teile A und 10 bis 75 Gew.-Teile B.

3. Formmassen gemäß Anspruch 1, enthaltend 2 bis 60 Gew.-Teile C.

4. Formmassen gemäß Anspruch 1, enthaltend aromatische Polyethersulfone mit einer Grundstruktur aus wiederkehrenden Einheiten der Formel (I)

-O-Z-O-W- (I)

worin Z den Rest eines zweiwertigen Phenols und W den Rest einer benzoiden Dihalogenverbindung mit einer inerten, elektronenanziehenden Gruppe bedeutet.

5. Formmassen gemäß Anspruch 1, enthaltend als B
Terpolymerisate aus
B.1 62-85 Gew.-Teilen $\alpha$-Methylstyrol,
B.2 10-50 Gew.-Teilen Acrylnitril und/oder Methacrylnitril und
B.3 1-50 Gew.-Teilen Acrylamid und/oder Methacrylamid.

6. Formmassen gemäß Anspruch 1, enthaltend als C
Pfropfpolymerisate aus
C.1 5 bis 90 Gew.-Teilen, einer Mischung aus
C.1.1 50 bis 95 Gw.-Teilen Styrol, $\alpha$-Methylstyrol, halogen- oder alkylkernsubstituierten Styrolen, $C_1$-$C_8$-Alkylmethacrylaten, $C_1$-$C_8$-Alkylacrylaten oder Mischungen dieser Verbindungen und
C.1.2 5 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. phenyl-N-substituierten Maleinimiden oder Mischungen dieser Verbindungen auf
C.2 10 bis 95 Gew.-Teilen Kautschuk mit einer Glasübergangstemperatur unter -10 °C.

7. Formmassen gemäß Anspruch 1, worin der Kautschuk in Pfropfpolymerisat C Dienkautschuk, Acrylatkautschuk, Siliconkautschuk oder Ethylen-Propylen-Dien-Kautschuk ist.

8. Formmassen gemäß Anspruch 1, enthaltend Stabilisatoren, Pigmente, Fließhilfsmittel, Entformungsmittel, Flammschutzmittel und/oder Antistatika.